(19) Europäisches Patentamt
European Patent Office
Office européen des brevets

(11) **EP 0 984 244 B1**

(12) **EUROPÄISCHE PATENTSCHRIFT**

(45) Veröffentlichungstag und Bekanntmachung des Hinweises auf die Patenterteilung:
**05.11.2008 Patentblatt 2008/45**

(51) Int Cl.:
*G01B 11/24* (2006.01)   *G01B 11/02* (2006.01)

(21) Anmeldenummer: **99116029.2**

(22) Anmeldetag: **16.08.1999**

(54) **Messverfahren und -vorrichtung**

Measuring method and device

Procédé et dispositif de mesure

(84) Benannte Vertragsstaaten:
**CH DE FR GB IT LI**

(30) Priorität: **05.09.1998 DE 19840628**

(43) Veröffentlichungstag der Anmeldung:
**08.03.2000 Patentblatt 2000/10**

(73) Patentinhaber: **Walter Maschinenbau GmbH**
**72072 Tübingen (DE)**

(72) Erfinder: **Meier, Andreas**
**30900 Wedemark (DE)**

(74) Vertreter: **Rüger, Barthelt & Abel**
**Patentanwälte**
**Webergasse 3**
**73728 Esslingen (DE)**

(56) Entgegenhaltungen:
**WO-A-95/27184**       **DE-A- 3 410 149**
**US-A- 4 807 145**     **US-A- 5 796 485**

EP 0 984 244 B1

## Beschreibung

Die Erfindung betrifft sowohl ein Verfahren als auch eine Vorrichtung zum Messen ausgewählter Kennwerte an Prüflingen, die wenigstens eine Kante, insbesondere eine Schneidkante, aufweisen.

Insbesondere Schneidwerkzeuge, wie bspw. Fräser, Bohrer oder anderweitige Werkzeuge für die spanende Bearbeitung, weisen Schneidkanten auf, an die sich eine Spanfläche und eine Freifläche anschließen. Sowohl die Beschaffenheit der Schneidkante als auch die Position und Beschaffenheit der Span- und Freifläche, insbesondere der Spanwinkel und der Freiwinkel bilden Kennwerte, die bei Zerspanungswerkzeugen häufig von besonders großem Interesse sind. Es kann sowohl erforderlich sein, an vorhandenen Werkzeugen den Freiwinkel zu bestimmen, um diesen bspw. beim Nachschliff wieder herzustellen, als auch an geschliffenen oder sonstwie bearbeiteten Werkzeugen den Freiwinkel zu messen, um das Bearbeitungsergebnis zu kontrollieren, bzw. Maschineneinstellungen zu überprüfen.

Berührende Messverfahren erfordern das Antasten von Schneide- und/oder Freifläche und sind in ihrer Auflösung begrenzt.

Aus der US-A-5 796 485 ist eine optische Messeinrichtung zur automatischen optischen Inspektion eines rotierenden Gegenstands bekannt. Zu der Messeinrichtung gehört eine Lichtquelle, die zueinander parallele Lichtstrahlen erzeugt. Der rotierende Körper ist in dem entstehenden Lichtstrahl angeordnet und wirft einen Schatten. Zur Aufnahme der Schattengrenzen sind optische Sensoren vorgesehen, die zur Verfolgung des Werkstücks senkrecht zur Ausbreitungsrichtung des Lichts bewegbar gelagert sind. US-A-4 807 145 offenbart ein Verfahren und eine Vorrichtung zum optischen Messen der Form oder der Grösse eines Rotationwerkzeugs.

Mit dieser Messeinrichtung lassen sich Durchmesser und Rundheit eines Werkstücks bestimmen.

Es ist deshalb Aufgabe der Erfindung ein Messverfahren zu schaffen, das ausgewählte Kennwerte von Prüflingen sicher erfasst. Außerdem ist es Aufgabe der Erfindung, eine entsprechende Messeinrichtung zu schaffen.

Die erfindungsgemäße Messeinrichtung nach Anspruch 7 und das erfindungsgemäße Messverfahren nach Anspruch 1 ermöglichen eine berührungslose Messung an Prüflingen, an deren Kanten und an ausgewählten Flächen. Dazu wird der Prüfling von einem Lichtstrahl gestreift, der dadurch teilweise abgeschattet wird. Zur Messung bzw. Bestimmung der gewünschten Parameter wird der Prüfling bewegt und der Schatten beobachtet. Dazu ist eine Beobachtungseinrichtung, bspw. eine Linienkamera oder eine ähnliche Einrichtung vorgesehen, die es ermöglicht, die Position eines Hell/Dunkel-Übergangs zu erfassen. Der Hell/Dunkel-Übergang wird in der Regel von der interessierenden Kante des Prüflings erzeugt. Wenn der Winkel oder die Position von einer Fläche als Kennwert bestimmt werden soll, wird der Hell/Dunkel-Übergang nacheinander von zwei an die Fläche grenzenden Kanten erzeugt. Zur Bestimmung der Kennwerte wird der Prüfling nun so gedreht, dass der Hell/Dunkel-Übergang auf der Beobachtungseinrichtung wandert. Aus der Art und Weise der Bewegung des Hell/ Dunkel-Übergangs bei Drehung des Prüflings schließt die Auswerteeinrichtung auf die interessierenden Kennwerte.

Der Vorteil dieses Verfahrens und der Vorrichtung liegt in der berührungsfreien Kennwerterfassung. Es ist kein Antasten von Flächen oder Kanten des Prüflings erforderlich. Die Messung kann zügig und bedarfsweise auch automatisiert durchgeführt werden. Es sind keinerlei Sonderausrüstungen zum Messen oder Prüfen unterschiedlicher Prüflinge erforderlich. Weder müssen Tastkörper gewechselt werden, noch sind Messschneiden oder dergleichen mechanische Tasteinrichtungen vorhanden oder erforderlich, die zu wechseln wären.

Mit dem optischen Messverfahren und der entsprechenden optischen Messeinrichtung lassen sich sehr hohe Messgenäuigkeiten auch dann erzielen, wenn die Auflösung der Beobachtungseinrichtung durch die Anzahl der lichtempfindlichen Einzelelemente beschränkt ist. Dies ist insbesondere möglich, wenn nicht nur die Anzahl der beleuchteten bzw. nicht beleuchteten Elemente erfasst, sondern im Hell/Dunkel-Übergang auch Zwischenwerte erfasst werden. Dies gestattet eine Auflösung, die größer als die Anzahl der lichtempfindlichen Elemente ist. Die Messgenauigkeit der Erfassungseinrichtung, die die Drehung des Prüflings verfolgt, ist vorzugsweise so hoch, dass sich bspw. 0,1 Grad Winkelschritte oder noch kleinere Winkelschritte erfassen lassen. Es kann dadurch mit sehr hohen Messwertzahlen gearbeitet werden, was wiederum eine genaue Vermessung des Prüflings wenigstens hinsichtlich ausgewählter Parameter gestattet.

Soll bspw. ein Freiwinkel an einer Freifläche gemessen werden, gelingt dies durch Beobachtung der Schattenwürfe zweier nacheinander in dem Lichtstrahl gedrehter Kanten des Prüflings. Diese Kanten begrenzen die Freifläche. Ein Vorteil der Erfindung liegt hier darin, dass der Winkel der Freifläche verhältnismäßig unabhängig von der konkreten Form der Freifläche messbar ist. Bspw. wird eine etwas konkav geformte Freifläche als gedachte Verbindung zwischen der Schneidkante und der von dieser beabstandeten parallelen Kante aufgefasst, die sie begrenzt. Gegenüber mechanischen Tastverfahren, die auf eine Berührung der Fläche angewiesen sind, wird hier die Messsicherheit erhöht.

Die Verlagerung des Schattens der zu vermessenden Kante bzw. der Hell/Dunkel-Grenze in Abhängigkeit von der Drehung des Prüflings enthält weitere Information, die von der Auswerteeinrichtung erfassbar ist. Wird bspw. eine exakt ausgebildete Kante eines Prüflings durch den Lichtstrahl gedreht, ist die Länge des von der Beobachtungseinrichtung erfassten Schattens eine Kosinusfunktion über dem Drehwinkel. Die Kosinusfunktion kann einen Phasenverschiebungswinkel und einen Offset enthalten. Weicht die erfasste Funktion von einer idealen Kosinusfunktion ab, können daraus Schlussfolgerungen auf die Güte der Kante, deren Verrundung bzw. deren Fasengröße gezogen werden.

Ein weiterer Vorzug des Verfahrens liegt darin, dass bspw. der Umfangsfreiwinkel, der in einer Ebenen zu messen ist, auf der die Drehachse orthogonal steht, unabhängig von der Neigung der Schneidkante bestimmbar ist. Damit können Schneidkanten und Freiflächen an Zerspanungswerkzeugen vermessen werden, deren Schneidkante parallel zu der Drehachse oder im Winkel zu dieser angeordnet sind, wie es bei spiralgenuteten Werkzeugen, bei kegelförmigen Fräsern oder ähnlichen Werkzeugen der Fall ist.

Es hat sich als vorteilhaft herausgestellt, die Messwerte, die beim Drehen des Prüflings durch den Lichtstrahl erhalten werden, durch eine Kosinusfunktion zu approximieren und die Kennwerte der untersuchten Kante oder anschließender Flächenbereiche an dieser Kosinusfunktion abzulesen, bzw. aus den Kosinusfunktionen unterschiedlicher Kanten zu ermitteln. Die Kosinusfunktion der Schattenlänge über dem Drehwinkel ergibt sich bei der Beobachtung der Projektion einer mathematisch exakten Kante und ist somit eine Idealfunktion. Durch die Approximation real gewonnener Messwerte mit der Idealfunktion wird der realen Kante eine Idealkante zugeordnet. Die Freifläche wird dann bspw. als ebene Fläche angesehen, die zwei benachbarte Idealkanten miteinander verbindet.

Zur Gewinnung der Parameter der Kosinusfunktion hat sich als vorteilhaftes Approximationsverfahren eine abschnittsweise Regression herausgestellt. Um diese durchzuführen werden in kleinen Schrittabständen erfassten Winkelwerte und die zugehörigen Positionswerte des Hell/Dunkel-Übergangs des Schattenwurfs (Projektion) der Kante zu Wertepaaren zusammengeordnet, wobei jeweils mehrere Wertepaare eine Wertepaargruppe bilden. Für jede Wertepaargruppe wird nun die gesuchte Kosinusfunktion bestimmt. Bildlich gesprochen wird somit ein Regressionsabschnitt schrittweise über die gesamte Messkurve geschoben. Die Regressionsabschnitte, in denen die Bestimmungen der Kosinusfunktion vorgenommen wird, können einander überlappen oder auch nicht überlappend gewählt sein. Im ersten Fall wird ein Messwertpaar mehreren Wertepaargruppen zugleich zugeordnet, während im letzteren Fall jedes Wertepaar nur genau einer Wertepaargruppe zugehört. Die überlappende Festlegung der Regressionsabschnitte kann bei der Auswertungen von Messungen vorteilhaft sein, die mit vergleichsweise wenigen Messwerten auskommen müssen, und die gewissermaßen grober aufgelöst sind. Bei feinerer Auflösung kann es genügen, die Regressionsabschnitte nicht überlappend festzulegen, wodurch der Rechenaufwand in Grenzen gehalten wird.

Aus den einzelnen Regressionsrechnungen, die für jeden Regressionsabschnitt einzeln durchgeführt werden, werden die Parameter der gesuchten Sinusfunktion vorteilhafter Weise bestimmt, indem zunächst Parameter als ungültig verworfen und somit aussortiert werden, die sehr stark von der Mehrheit der anderen Parameter abweichen. Solche Ausreißer können an Randbereichen entstehen, bei denen der Schattenwurf einer Kante gerade dabei ist, von dem Schattenwurf einer anderen Kante überlagert zu werden. Nach Aussortierung ungültiger Werte können die Parameter der gesuchten Kosinusfunktion anhand der Häufigkeit bestimmt werden, mit der sie auftreten. Streuen die ermittelten Parameter bspw. um einen Mittelwert, wird dieser Mittelwert (Erwartungswert) als gesuchter Parameter festgehalten.

Im Gegensatz zu mechanischen Messverfahren wird bei dem erfindungsgemäßen Messverfahren zumindest in seiner vorzugsweisen Ausprägung mit der gesuchte Kennwert durch statistische Auswertung einer Vielzahl von Einzelmesswerten gewonnen, wodurch eine hohe Messsicherheit und Präzision erreicht werden kann. Verfälschungen der Messergebnisse infolge geringfügiger lokaler Deformationen können ausgeschlossen oder minimiert werden. Außerdem ist durch die Approximation der gewonnen Messdaten mit einer idealen Kosinusfunktion die Möglichkeit geschaffen, den Einfluss einer Verrundung der Schneidkante auf die Messung des Freiwinkels zurück zu drängen. Die Position der Schneidkante wird bei dem erfindungsgemäßen Messverfahren eindeutig festgelegt, auch wenn die Schneidkante eine Fase oder eine Rundung und somit keine Kante im mathematischen Sinne bildet.

Neben der schrittweisen Regression und der statistischen Verarbeitung der in jedem Regressionsabschnitt gewonnenen Parameter zur Gewinnung einer kosinusförmigen Approximationsfunktion, können andere Approximationsverfahren Anwendung finden. Bspw. kann die Approximation mit der Methode des kleinsten Fehlerquadrats oder mit einem sonstigen Approximationsverfahren durchgeführt werden, das dazu geeignet ist, wenige Parameter der gesuchten Funktion, bspw. den Offset-Wert und den Phasenverschiebungswinkel bei einer Kosinusfunktion anhand einer weitaus größeren Zahl von Messwerten (bspw. 100) festzulegen.

Weitere vorteilhafte Einzelheiten von Ausführungsformen der Erfindung sind Gegenstand von Unteransprüchen, ergeben sich aus der Zeichnung oder aus der Beschreibung.

In der Zeichnung ist ein Ausführungsbeispiel der Erfindung veranschaulicht. Es zeigen:

Figur 1 eine erfindungsgemäße Messeinrichtung mit einem Prüfling in perspektivischer aufs äußerste schematisierter Darstellung,

Figur 2 die Messeinrichtung nach Figur 1 in Draufsicht und in schematisierter Darstellung,

Figur 3 die zu der Messeinrichtung nach Figur 1 und 2 gehörige Auswerteeinrichtung in schematisierter Darstellung,

Figur 4 die geometrischen Verhältnisse für die Projektion einer Kante als Diagramm,

Figur 5 an sich bei Drehung eines Prüflings ergebender Amplitudenverlauf für einen Prüfling mit drei Kanten als Diagramm,

Figur 6 ein Diagramm verschiedener Offset-Werte, die in unterschiedlichen Regressionsschritten erhalten worden sind.

Figur 7 ein Diagramm unterschiedlicher Radius- und Winkelwerte, die in verschiedenen Regressionsschritten erhalten worden sind, und

Figur 8 geometrische Beziehungen an dem für die Messung zugrunde gelegten Werkzeug und zur Bestimmung gesuchter Freiwinkel.

Beschreibung

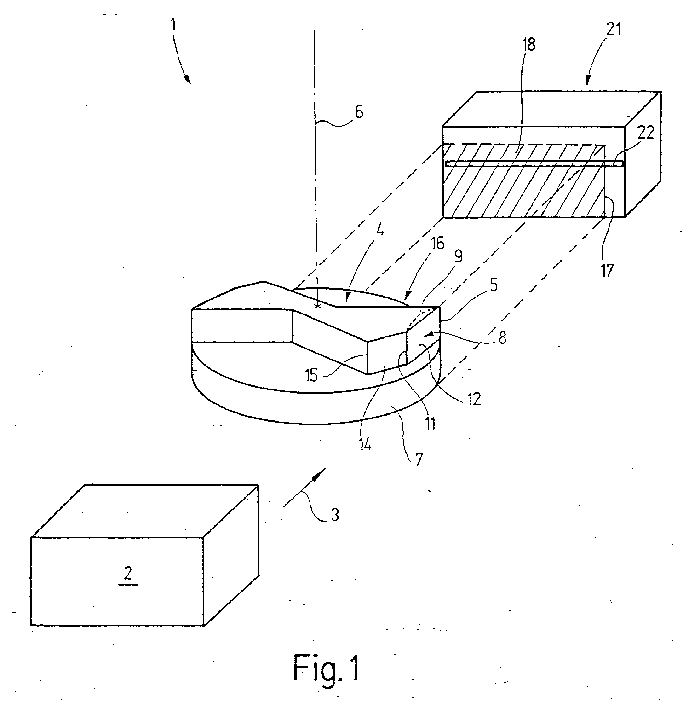

In Figur 1 ist eine Messeinrichtung 1 veranschaulicht, zu der eine Lichtquelle 2 gehört, die in einer durch einen Pfeil 3 markierten Richtung an paralleles Lichtbündel aussendet. Die Lichtquelle kann dazu einen Laser oder eine Punktlichtquelle enthalten, die über eine Optik ein entsprechendes Lichtbündel erzeugt. Bedarfsweise kann auch mit einem nicht parallelen, bspw. divergenten Lichtbündel gearbeitet werden, was allerdings den Aufwand bei der Auswertung der Messung etwas erhöht. Das vorzugsweise parallele Lichtbündel ist auf einen Prüfling 4 gerichtet. Dieser ist bspw. ein in Figur 1 symbolische angedeutetes Zerspanungswerkzeug mit einer Schneidkante 5, die im wesentlichen parallel zu einer Drehachse 6 des Prüflings 4 ausgerichtet ist. Der Prüfling ist auf einer Prüflingaufnahme 7 so gehalten, dass die Drehachse des Zerspanungswerkzeugs mit der Drehachse der Prüflingaufnahme 7 übereinstimmt. Die Prüflingaufnahme 7 ist dazu auf einer entsprechenden Drehvorrichtung gelagert, die eine kontinuierliche oder alternativ eine schrittweise Drehung des Prüflings 4 um seine Drehachse 6 gestattet.

Der Prüfling 4 weist im Anschluss an seine Schneidkante 5 eine Freifläche 8 auf, die im vorliegenden Beispiel plan ausgebildet ist. Wie bei 9 gestrichelt angedeutet und übertrieben dargestellt, kann die Freifläche 8 jedoch auch konkav gewölbt sein oder anderweitig von einer ebenen Fläche abweichen. An ihrer von der Schneidkante 5 abliegenden Seite ist die Freifläche 8 durch eine weitere Kante 11 unterbrochen, die von der Freifläche 8 einen ersten Flächenbereich 12 abtrennt. Von der Kante 11 erstreckt sich ein weiterer Flächenbereich 14 bis zu einer Hinterkante 15 des Prüflings 4.

Die Prüflingsaufnahme 7 ist so angeordnet, dass der Prüfling 4 einen Teil des Lichtstrahls abschattet. Die Schneidkante 5, die die Freifläche 8 von einer Spanfläche 16 des Prüflings 4 trennt, erzeugt dabei, insbesondere wenn die Spanfläche 16 etwa quer zu dem Lichtstrahl gerichtet ist, einen Hell/Dunkel-Übergang 17, der einen Schattenwurf 18 des Prüflings 4 an einer Seite begrenzt. Der Hell/Dunkel-Übergang 7 ist die Projektion der Schneidkante 5 und, wenn der Prüfling 4 weiter gedreht wird, der Kanten 11 und 15.

Zur Erfassung des Schattens 18 und insbesondere der Position des Hell/Dunkel-Übergangs 17 dient eine Beobachtungseinrichtung 21. Diese weist bspw. eine CCD-Zeile 22 oder eine anderweitige Einrichtung auf, mit der die Position des Hell/Dunkel-Übergangs 17 erfassbar ist. Die CCD-Zeile 22 ist durch eine gerade Reihe nebeneinander angeordneter lichtempfindlicher Elemente gebildet, wobei die Reihe quer zu der Richtung des Lichtstrahls (Pfeil 3) und außerdem quer zu der Drehachse 6 ausgerichtet ist. Von ihrer Länge her ist sie so bemessen und sie ist so angeordnet, dass der Hell/Dunkel-Übergang 17 in jedem Fall in einem von der CCD-Zeile 22 erfassten Bereich steht, wenn die Spanfläche 16 des Prüflings 4 quer zu dem Lichtstahl gerichtet ist. Außerdem ist die CCD-Zeile 22 so lang und so angeordnet, dass der Hell/Dunkel-Übergang 17 in seiner Position noch erfassbar ist, wenn die Schneidkante 5 bereits im Schatten der Kante 11 oder der Hinterkante 15 liegt und diese den Hell/Dunkel-Übergang 17 bestimmen.

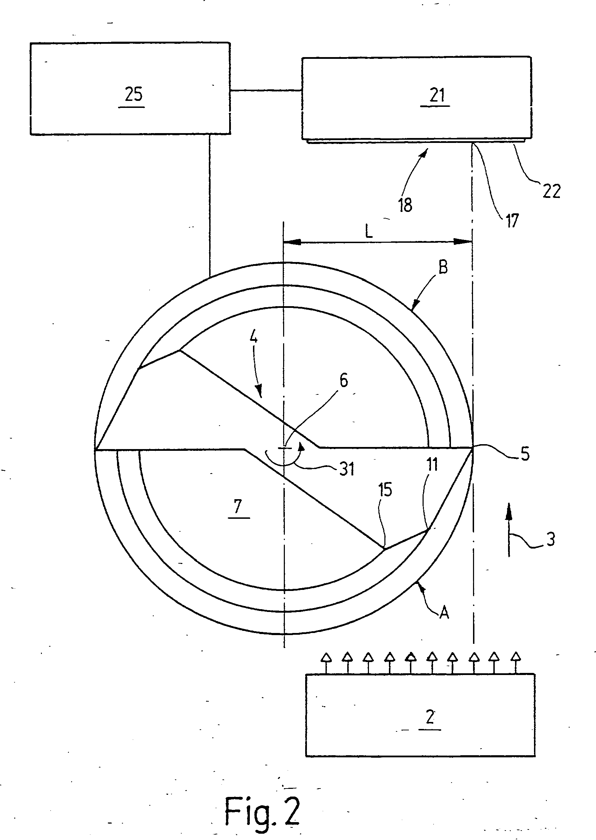

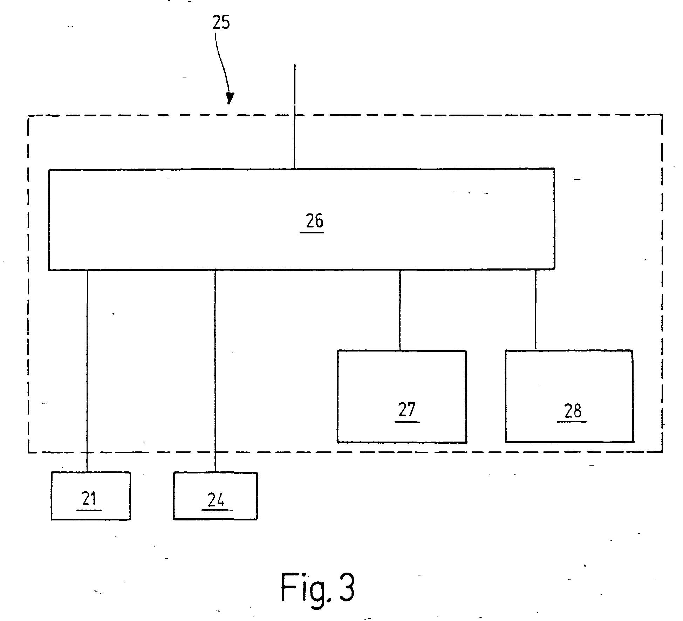

Außer der Beobachtungseinrichtung 21 zur Erfassung der Länge des Schattens 18 ist, wie schematisch aus Figur 2 und 3 hervorgeht, eine Sensoreinrichtung 24 vorgesehen, die den aktuellen Drehwinkel des Prüflings 4 bzw. der Prüflingsaufnahme 7 erfasst und an eine Steuer- und Auswerteeinrichtung 25 meldet. Die Erfassungseinrichtung 24 weist eine Winkelauflösung auf, die es gestattet, Messwerte in dichter Folge aufzunehmen. Bspw. kann die Mindestwinkelauflösung etwa 0,1 Grad betragen. Sind höhere Messwertdichten gewünscht, kann die Auflösung auch höher gewählt werden.

Die Steuer- und Auswerteeinrichtung ist außerdem mit einer nicht weiter dargestellten Antriebseinrichtung verbunden, die die Prüflingsaufnahme 7 zur Messung des Prüflings 4 definiert dreht oder schrittweise weiterbewegt.

Zur Auswertung der von der Beobachtungseinrichtung 21 und der Erfassungseinrichtung 24 erhaltenen Signale weist die Auswerte- und Steuereinrichtung 25 einen Zentralblock 26 auf, der bpsw. durch ein auf einem geeigneten Rechner laufendes Programm gebildet sein kann. Der Zentralblock 26 arbeitet mit einem Speicherblock 27 und einem Regressionsblock 28 zusammen. Der Speicherblock 27 enthält oder bedient eine Hardware-Komponente, die der Beobachtungseinrichtung 21 und der Erfassungseinrichtung 24 abgegebenen Signale in oder aus diesen gewonnene Daten in digitalisierter Form zwischenspeichert.

Der Regressionsblock 28 ist vorzugsweise durch einen Programmabschnitt, ein Unterprogramm oder ein Programmmodul gebildet, das aus mehreren Wertepaaren (Punkten), die von dem Zentralblock 26 geliefert werden, Parameter bestimmt. Diese legen eine Kosinusfunktion fest, die die vorgegebenen Punkte bzw. Wertepaare approximiert, so dass diese Punkte auf der so bestimmten Kosinusfunktion liegen.

Die insoweit beschriebene Messeinrichtung 1 arbeitet wie folgt:

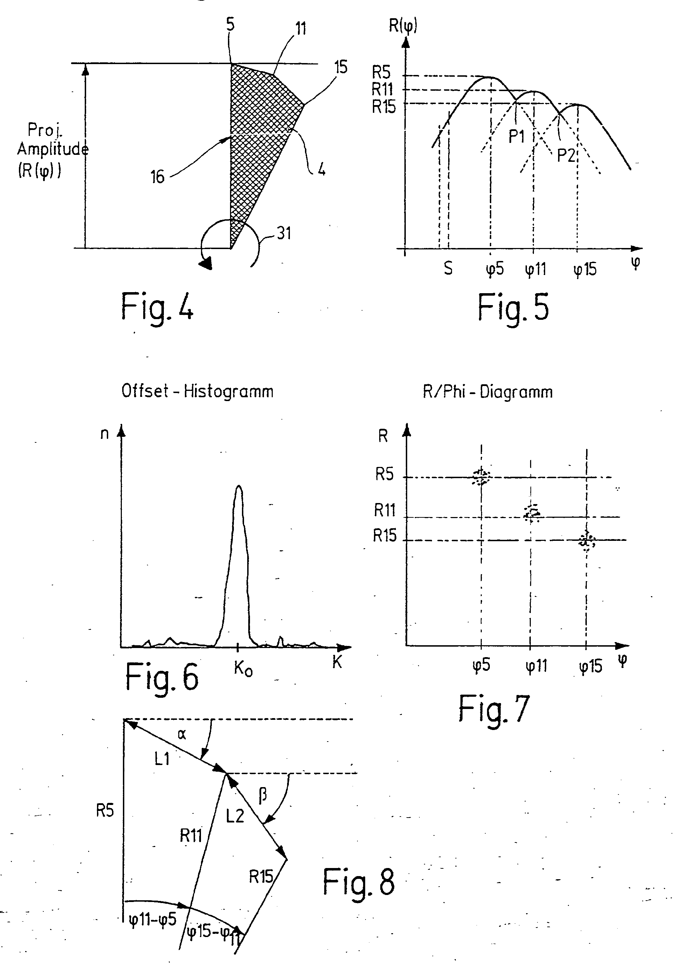

Zur Erläuterung der Arbeitsweise wird davon ausgegangen, dass die Freiwinkel der Freifläche 8 bestimmt werden sollen. Die Steuer- und Auswerteeinrichtung 25 veranlasst dazu den Prüflingsträger 7, sich in Richtung des in Figur 2 veranschaulichten Pfeils 31 relativ langsam zu drehen. Die Schneidkante 5 wird hierbei bspw. aus einer in Figur 2 markierten Position A in eine Position B überführt. Der hier durchlaufende Drehwinkel beträgt ungefähr 90 Grad. Der Punkt A ist so festgelegt, dass der von der Schneidkante 5 geworfene Schatten 18 seine maximale Länge L mit Sicherheit noch nicht erreicht hat. Der Punkt B ist so festgelegt, dass der von der Hinterkante 15 geworfene Schatten seine maximale Länge mit Sicherheit durchlaufen hat. In Figur 2 ist die Schneidkante 5 in einer Position veranschaulicht, in der die gedachte Verbindung zu der Drehachse 6 rechtwinklig zu der Richtung 3 des Lichtstrahls gerichtet ist. In dieser Position weist der Schatten 18 seine maximale Länge L auf. Bei langsamen Drehen des Prüflings 4 ergibt sich an der CCD-Zeile 22 eine Schattenlänge $R(\phi)$ in Abhängigkeit von dem Drehwinkel $\phi$, wie sie in Figur 5 veranschaulicht ist. Dies wird durch die in Figur 4 veranschaulichte geometrische Darstellung der Projektionsverhältnisse ersichtlich. Für jede Kante 5, 11, 15 gilt:

$$R(\phi) \ = \ R \ * \ \cos \ (\phi \ - \ \phi_0),$$

wobei R der Radius der jeweiligen Kante 5, 11 oder 15, und

$\phi_0$ der Winkel der jeweiligen Kante 5, 11 oder 15 zwischen zu einer Bezugsposition ist.

Bei Drehung des Prüflings 4 wirft zunächst die Schneidkante 5 Schatten auf die Beobachtungseinrichtung 21 und bestimmt somit den Hell/Dunkel-Übergang 17. Je näher sich der Prüfling 4 bei seiner Drehung der Position annähert, bei der seine Spanfläche 16 quer zu dem Lichtbündel steht, desto größer wird die von der Beobachtungseinrichtung 21 erfasste Amplitude, d. h. in Figur 2 desto weiter verlagert sich die Hell/Dunkel-Grenze 17 nach rechts. Steht die Verbindung zwischen der Drehachse 6 und der Schneidkante 5 exakt rechtwinkelig zu dem Lichtstrahl, ist der in Figur 5 mit $\phi_5$ bezeichnete Winkelwert erreicht und die Amplitude $R(\phi)$ hat ihr Maximum erreicht. Bei weiterer Drehung des Prüflings 4 wird die Amplitude $R(\phi)$ wieder geringer. Die Amplitude $R(\phi)$ ist ein Ausschnitt aus einer Kosinusfunktion über dem Drehwinkel $\phi$.

Wird der Prüfling 4 weiter gedreht, erreicht die Kante 11 allmählich einen Punkt P1, bei der eine gedachte Verbindung zu der Schneidkante 5 parallel zu dem Lichtbündel steht. Bei weiterer Drehung schattet nun die Kante 11 den Lichtstrahl ab, während sich die Schneidkante 5 bereits im Schatten befindet, der von der Kante 11 geworfen wird. Die Amplitudenfunktion $R(\phi)$ wird nun von der Kante 11 bestimmt. Das Maximum R11 wird erreicht, wenn der Drehwinkel $\phi$ mit dem Radialwinkel $\phi_{11}$ der Kante 11 übereinstimmt. Nach Durchlaufen des Maximums R11 nimmt die Amplitudenfunktion $R(\phi)$ wieder ab, bis die Hinterkante 15 bei einem Punkt P2 den Schattenwurf übernimmt. Die Amplitudenfunktion $R(\phi)$ erreicht ihren Maximalwert R15, wenn der Drehwinkel mit dem Radialwinkel $\phi_{15}$ der Hinterkante 15 übereinstimmt. Die Messung wird vorzugsweise noch um einige Grad fortgesetzt, um eine gute Datenbasis zu gewinnen.

Die von der Erfassungseinrichtung 24 erfassten Winkelwerte und die von der Beobachtungseinrichtung 21 ermittelten Amplitudenwerte werden von dem Zentralblock 26 an den Speicherblock 27 übergeben. Dabei wird jedem diskreten Winkelwert $\phi$ jeweils ein zugehöriger Amplitudenwert R zugeordnet. Ein Winkelwert und ein zugehöriger Amplitudenwert bilden jeweils ein Wertepaar $\phi$, R das einen Punkt auf der dick durchgezogenen Kurve in Figur 5 markiert.

Zur Auswertung der Messung, bspw. zur Bestimmung der Freiwinkel $\alpha$ und $\beta$, wie sie in Figur 8 veranschaulicht sind, kommt es nun darauf an, die Phasenverschiebungswinkel $\phi_5$, $\phi_{11}$ und $\phi_{15}$ sowie die zugehörigen Amplitudenmaxima R5, R11 und R15 zu bestimmen. Diese enthalten unter Umständen noch einen Summanden oder Offset-Wert K, der ebenfalls zu bestimmen ist. Dies läuft darauf hinaus, den Funktionsverlauf nach Figur 5 in drei Einzelkurven zu zerlegen, die jeweils durch eine Kosinusfunktion ab:

$$f(\phi) \ = \ R \ * \ \cos(\phi \ - \ \phi_0) \ + \ K$$

approximiert werden. Gesuchte Parameter dieser Kosinusfunktion sind der Radius R, der Phasenverschiebungswinkel $\phi_0$ (d. h. $\phi_5$, $\phi_{11}$ bzw. $\phi_{15}$) und der Offset-Wert K. Insgesamt sind drei Kosinusfunktionen zu bestimmen, für die jedoch jeweils mehrere zehn bis mehrere hundert Einzelwertepaare vorliegen können. Die Parameter Radius R, Offset-Wert

K und Phasenverschiebungswinkel $\varphi$ werden nun so bestimmt, dass die dadurch festgelegt Kosinusfunktion die erhaltenen Messwerte bestmöglich annähert. Im vorliegenden Ausführungsbeispiel wird dazu eine Regressionsrechnung durchgeführt. Dazu wird der Drehwinkelbereich $\varphi$, über den gemessen worden ist, in Regressionsabschnitte S zerlegt. Diese enthalten wenigstens drei, vorzugsweise mehrere Messpunkte (Wertepaare). Der Regressionsabschnitt wird schrittweise über die gesamte Funktion geschoben. Die Schritte können dem Messpunktabstand entsprechen oder größer gewählt sein. In jedem Schritt, d. h. in jedem Regressionsabschnitt werden die drei Parameter Amplitude oder Radius R, Phasenverschiebungswinkel $\varphi$ und Offset-Wert K separat berechnet. Dazu wird die Steigungsfunktion der oben genannten Kosinusfunktion benutzt:

$$m(\varphi) = -R * \sin(\varphi - \varphi_0),$$

wobei $m(\varphi)$ die Ableitung der Kosinusfunktion nach dem Winkel ist und den lokalen Anstieg der Kosinusfunktion kennzeichnet.

Mit der Substitution:

$$y = \tan(\varphi),$$

$$x = \frac{m}{\cos(\varphi)}$$

$$a = \frac{1}{(R \cdot \cos(\varphi_0))}$$

$$b = -\tan(\varphi_0)$$

kann die Regression an einer linearen Gleichung:

$$y = a \cdot x + b$$

durchgeführt werden. Dazu dient der Regressionsblock 28, der die Regression für jeden Regressionsabschnitt durchführt. Das Ergebnis sind für jeden Regressionsschnitt Konstanten K und Wertepaare $\varphi$, R $\varphi_5$, $R_5$; $\varphi_{11}$, $R_{11}$; $\varphi_{15}$, $R_{15}$), die in den Figuren 6 und 7 veranschaulicht sind. Über die gesamte Amplitudenfunktion $R(\varphi)$ werden in der Regel verschiedene Offset-Werte K, die um einen Wert K0 deutlich gehäuft auftreten. Dieser Offset-Wert K0 ist in der Regel für alle drei Kosinusfunktionen (für alle drei Kanten) konstant. Er kennzeichnet einen Abstand der Drehachse 6 von einer zu ihr parallelen Nullachse. Deutlich von dem gehäuft auftretenden Wert K0 abweichende Offset-Werte treten bei der Berechnung im Übergang von einer Kosinusfunktion auf eine andere, d. h. an den Punkten P1 und P2 auf. Diese Offset-Werte werden als ungültig gekennzeichnet und nachfolgend vernachlässigt.

Die $\varphi$- und R-Werte werden gemäß Figur 7 nach Auftreten ihrer Häufigkeit zugeordnet. Der Schwerpunkt der für $\varphi_5$ und $R_5$ bestimmten Wertepaare, d. h. der mittlere auftretende Wert wird als Wertepaar zur Approximation der Kosinusfunktion für die Schneidkante 5 genommen. Entsprechend wird für die Kante 11 und die Hinterkante 15 verfahren.

Das Verfahren ist nicht auf das Vorhandensein dreier Kanten beschränkt. Wie leicht ersichtlich, ist die Zahl der durch den Lichtstrahl gelaufenen Kanten durch die Anzahl der in dem Diagramm nach Figur 7 aufgetretenen Messwerthäufungen oder -clustern bestimmbar. Entsprechend ordnet der Zentralblock automatisch nach der Anzahl der auftretenden Cluster eine entsprechende Anzahl von entsprechenden Approximationsfunktionen zu.

Anhand der so gewonnenen Rechenwerte kann bspw. der Freiwinkel Alpha oder Beta nach Figur 8 bestimmt werden. Bekannt sind die Winkel $\varphi_5$, $\varphi_{11}$ und $\varphi_{15}$ sowie die Radien $R_5$, $R_{11}$ und $R_{15}$. Die Winkeldifferenz $\varphi_{11} - \varphi_{15}$ bildet einen Innenwinkel eines Dreiecks mit den Seiten $R_5$ und $R_{11}$ und einer Seite L1. Nachdem zwei Seiten $R_5$, $R_{11}$ und ein Innenwinkel des Dreiecks bekannt sind, ist dieses vollständig definiert und es lassen sich alle anderen Winkel einschließlich des Winkels L1 und der Seite R5 bestimmen. Dieser Innenwinkel ergänzt sich mit dem gesuchten Freiwinkel $\alpha$ zu 90°, woraus dieser bestimmbar ist. Der Zentralblock 26 nimmt die Bestimmung entsprechend vor. Ähnlich wird für das Dreieck vorgegangen, das von den Radien R11, R15 und dem Innenwinkel $\varphi_{15} - \varphi_{11}$ festgelegt ist. Der Unterschied ist hier, dass der Freiwinkel $\beta$ mit dem benachbarten Innenwinkel nicht zu 90°, sondern zu einem Winkel ergänzt, der 90° + $\varphi_{11}$ - $\varphi_5$ ist. Der Zentralblock berechnet den Freiwinkel $\beta$ entsprechend.

Die Messung wird unabhängig davon, wie groß die Entfernung zwischen durchlaufenden Kanten ist, vorgenommen, so dass das Messverfahren sowohl zur Bestimmung des Freiwinkels an größeren Freiflächen, als auch zur Bestimmung von fasenwinkeln Anwendung finden kann.

Das erfindungsgemäße Messverfahren und die entsprechende Messeinrichtung 1 nutzen ein Lichtbündel zur Bestimmung von ausgesuchten Kennwerten, bspw. des Freiwinkels an einer Schneidkante 5 eines Prüflings 4. Das Lichtbündel wird etwa rechtwinklig zu der Schneidkante so geführt, dass die Schneidkante einen Schatten auf eine Beobachtungseinrichtung 21 wirft. Durch Drehung des Prüflings 4 verlagert sich der Schatten. Aus dem Verlauf der Verlagerung des Schattens in Abhängigkeit von dem Drehwinkel bestimmt eine Auswerteeinrichtung 25 bspw. den Freiwinkel des Prüflings 4.

## Patentansprüche

1.  Verfahren zum Messen ausgewählter Kennwerte an Prüflingen (4) mit wenigstens einer Kante (5), insbesondere Schneidkanten,
    bei dem der Prüfling (4) wenigstens mit seiner Kante (5) in dem Strahlengang (3) einer Lichtquelle (2) derart angeordnet wird, dass er den Strahlengang (3) wenigstens bereichsweise unterbricht und mit seiner Kante (5) einen Schatten (18) begrenzt,
    bei dem der Prüfling (4) um eine Achse (6) wenigstens um einen festgelegten Winkelbereich gedreht wird,
    bei dem der von der Kante (5) des Prüflings (4) erzeugte Schatten (18) mittels einer Beobachtungseinrichtung (18) verfolgt wird und
    bei dem von der Beobachtungseinrichtung (21) abgegebene Signale, die die Position der von der Kante (5) erzeugten Grenze des Schattens (18) kennzeichnen, ausgewertet werden,
    **dadurch gekennzeichnet,**
    **dass** zur Auswertung der von der Beobachtungseinrichtung (21) abgegebenen Signale die durch zuordnung zu Drehwinkelwerten erhaltenen Wertepaare bereichsweise mit einer Kosinusfunktion approximiert werden,
    **dass** die Kosinusfunktion als Parameter eine Radiuskonstante, eine Winkelkonstante und eine Offsetkonstante enthält, die durch Auswertung der Grenze des Schattens aus den Wertepaaren bestimmt werden, und dass die Kosinusfunktionen für wenigstens zwei Kanten des Prüflings bestimmt werden, und
    **dass** aus den Kosinusfunktionen benachbarter, an dem Werkzeug vorhandener Kanten Winkel von Flächenbereichen bestimmt werden, die von den Kanten begrenzt werden.

2.  Verfahren nach Anspruch 1, **dadurch gekennzeichnet, dass** bei der Drehung des Prüflings Drehpositionswerte erfasst werden, die zur Erzeugung von Wertepaaren Signalwerten zugeordnet werden, die auf den von der Beobachtungseinrichtung (21) abgegebenen Signalen beruhen.

3.  Verfahren nach Anspruch 1, **dadurch gekennzeichnet, dass** die Verlagerung des Schattens (18) bei Drehung des Prüflings in einer Richtung verfolgt wird, die im wesentlichen rechtwinklig zu, der Drehachse orientiert ist.

**4.** Verfahren nach Anspruch 3, **dadurch gekennzeichnet, dass** der Strahlengang (3) im wesentlichen rechtwinklig zu der Drehachse (6) des Prüflings sowie rechtwinklig zu der Richtung gerichtet wird, in der die Beobachtungseinrichtung (21) den Schatten (18) verfolgt.

**5.** Verfahren nach Anspruch 2, **dadurch gekennzeichnet, dass** aus den Wertepaaren Gruppen herausgegriffen werden, die jeweils einzeln der Bestimmung einer Kosinusfunktion und deren Parameter dienen.

**6.** Verfahren nach Anspruch 5, **dadurch gekennzeichnet, dass** die Parameter als gültig klassifiziert werden, die über alle Gruppen, die ein und derselben Kante und somit ein und derselben Kosinusfunktion zugeordnet sind, gehäuft auftreten.

**7.** Messeinrichtung (1), insbesondere zum Messen ausgewählter Kennwerte an Prüflingen (4) mit wenigstens einer Kante (5), insbesondere Schneidkanten,
mit einer Aufnahmeeinrichtung (7) für den Prüfling (4), mit der der Prüfling um eine vorgegebene Achse (6) drehbar ist und die mit einer Erfassungseinrichtung verbunden ist, die die Drehposition des Prüflings (4) kennzeichnende Signale abgibt,
mit einer Beleuchtungseinrichtung (2), die ein Lichtbündel erzeugt, das wenigstens eine Kante (5) des Prüflings derart beleuchtet, dass das Lichtbündel teilweise unterbrochen und ein Schatten (18) erzeugt wird,
mit einer Beobachtungseinrichtung (21), die der Lichtquelle (2) gegenüberliegend derart angeordnet ist, dass der von der Kante (5) erzeugte Schatten (18) auf die Beobachtungseinrichtung (21) fällt, und die Signale abgibt, die die Position des Schattens kennzeichnen,
mit einer Auswerteeinrichtung (25), der die Signale der Erfassungseinrichtung (21) und der Beobachtungseinrichtung (24) zugeleitet sind und die die Signale auswertet, und
mit Mitteln zur Durchführung des Verfahrens nach Anspruch 1.

**8.** Messeinrichtung nach Anspruch 7, **dadurch gekennzeichnet, dass** die Auswerteeinrichtung (25) einen Zentralblock (26) und einen Regressionsblock (28) enthält, wobei der Zentralblock (26) oder ein anderer Block (27) dazu eingerichtet ist, die Signale der Erfassungseinrichtung (24) und der Beobachtungseinrichtung (21) zu Wertepaaren zusammenzufassen und Wertepaare zu Gruppen zu ordnen, und dass der Zentralblock (26) dazu eingerichtet ist, den Regressionsblock (28) für jede Gruppe zu aktivieren, um die Kosinusfunktion für jede Gruppe zu bestimmen.

**9.** Messeinrichtung nach Anspruch 8, **dadurch gekennzeichnet, dass** sie zur Bestimmung der Radien der vermessenen Kanten aus den Kosinusfunktionen eingerichtet ist.

**10.** Messeinrichtung nach Anspruch 7, **dadurch gekennzeichnet, dass** diese dazu eingerichtet ist, aus jeder Kosinusfunktion den Winkel und den Radius der den Schatten (18) werfenden Kante (5) zu bestimmen und dass sie dazu eingerichtet ist, den Erwartungswert oder den Mittelwert der erhaltenen Radien und Winkel jeweils als den gültigen Winkelwert und Radiuswert festzulegen.

**11.** Messeinrichtung nach Anspruch 7, **dadurch gekennzeichnet, dass** die Aufnahmeeinrichtung (7) mit einer Drehvorrichtung verbunden ist, die von einer mit der Auswerteeinrichtung (25) verbundenen Steuereinrichtung gesteuert ist.

**12.** Messeinrichtung nach Anspruch 7, **dadurch gekennzeichnet, dass** die Beobachtungseinrichtung (21) eine Linienkamera (22) ist, deren lichtempfindliche Elemente in einer Reihe angeordnet sind, die quer zu der vorgegebenen Achse (6) orientiert ist.

## Claims

**1.** Method for measuring selected characteristic values on test items (4) with at least one edge (5), in particular cutting edges,
in which the test item (4) is arranged at least with its edge (5) in the beam path (3) of a light source (2) in such a manner that it interrupts the beam path (3) at least in regions and defines a shadow (18) with its edge (5),
in which the test item (4) is rotated around an axis (6) at least by a defined angle range,
in which the shadow (18) generated by the edge (5) of the test item (4) is tracked by means of an observation means (21), and
in which signals, which are emitted by the observation means (21) and identify the position of the boundary of the shadow (18) generated by the edge (5), are evaluated,
**characterised in that**
to evaluate the signals emitted by the observation means (21), the value pairs obtained by allocation to rotational angle values are approximated in regions with a cosine function,
that the cosine function includes as parameters a radius constant, an angle constant and an offset constant, which are determined by evaluation of the boundary of the shadow from the value pairs, and that the cosine functions are determined for at least two edges of the test item, and
that angles of surface regions bordered by adjacent edges present on the tool are determined from the cosine functions of said edges.

2. Method according to claim 1, **characterised in that** rotational position values are detected during rotation of the test item, which are assigned signal values based on the signals emitted by the observation means (21) in order to generate value pairs.

3. Method according to claim 1, **characterised in that** the displacement of the shadow (18) is tracked during rotation of the test item in a direction oriented substantially at right angles to the rotational axis.

4. Method according to claim 3, **characterised in that** the beam path (3) is directed substantially at right angles to the rotational axis (6) of the test item and also at right angles to the direction, in which the observation means (21) tracks the shadow (18).

5. Method according to claim 2, **characterised in that** groups, which individually respectively serve to determine a cosine function and its parameters, are singled out from the value pairs.

6. Method according to claim 5, **characterised in that** the parameters classified as valid are those, which occur accumulated over all groups assigned to one and the same edge and therefore to one and the same cosine function.

7. Measuring device (1), in particular for measuring selected characteristic values on test items (4) with at least one edge (5), in particular cutting edges,
with a receiving means (7) for the test item (4), with which the test item can be rotated around a predetermined axis (6) and which is connected to a detection means, which emits signals identifying the rotational position of the test item (4),
with an illumination means (2), which generates a light beam, which illuminates the test item in such a manner that the light beam is partially interrupted and a shadow (18) is generated,
with an observation means (21), which is arranged opposite the light source (2) such that the shadow (18) generated by the edge (5) falls onto the observation means (21), and which emits signals, which identify the position of the shadow,
with an evaluation means (25), to which the signals of the detection means (21) and the observation means (24) are directed and which evaluates the signals, and
with means for conducting the method according to claim 1.

8. Measuring device according to claim 7, **characterised in that** the evaluation means (25) includes a central block (26) and a regression block (28), wherein the central block (26) or another block (27) is fitted to collate the signals of the detection means (24) and the observation means (21) into value pairs and to arrange value pairs into groups, and that the central block (26) is fitted to activate the regression block (28) for each group in order to determine the cosine function for each group.

9. Measuring device according to claim 8, **characterised in that** it is fitted to determine the radii of the measured edges from the cosine functions.

10. Measuring device according to claim 7, **characterised in that** this is fitted to determine the angle and the radius of the edge (5) casting the shadow (18) from each cosine function, and that it is fitted to respectively define the expected value or the mean value of the radii and angles obtained as the valid angle value and radius value.

11. Measuring device according to claim 7, **characterised in that** the receiving means (7) is connected to a rotation device, which is controlled by a control means connected to the evaluation means (25).

12. Measuring device according to claim 7, **characterised in that** the observation means (21) is a line camera (22), the light-sensitive elements of which are arranged in a row oriented transversely to the predetermined axis (6).

**Revendications**

1.  Procédé de mesure de valeurs caractéristiques sélectionnées, sur des éprouvettes (4) comportant au moins une arête (5), en particulier des arêtes de coupe,
    selon lequel l'éprouvette (4) est disposée au moins avec son arête (5) dans la trajectoire des rayons (3) d'une source lumineuse (2), de manière à ce qu'elle interrompe au moins localement la trajectoire des rayons (3) et délimite une ombre (18) avec son arête (5),
    selon lequel l'éprouvette (4) est mise en rotation autour d'un axe (6), au moins d'une plage angulaire prédéterminée,
    selon lequel l'ombre (18) produite par l'arête (5) de l'éprouvette (4) est suivie à l'aide d'un dispositif d'observation (21), et
    selon lequel on exploite des signaux qui sont émis par le dispositif d'observation (21) et caractérisent la position de la limite de l'ombre (18) produite par l'arête (5),
    **caractérisé par le fait que**
    pour exploiter les signaux émis par le dispositif d'observation (21), les paires de valeurs obtenues par affectation à des valeurs d'angles de rotation sont approchées localement avec une fonction cosinus,
    la fonction cosinus contient comme paramètres une constante de rayon, une constante d'angle et une constante de décalage, qui sont déterminées à partir des paires de valeurs, par analyse de la limite de l'ombre, et **par le fait que** les fonctions cosinus sont déterminées pour au moins deux arêtes de l'éprouvette, et que
    l'on détermine à partir des fonctions cosinus d'arêtes voisines, existant sur l'outil, des angles de zones de surface qui sont délimitées par les arêtes.

2.  Procédé selon la revendication 1, **caractérisé par le fait que** lors de la rotation de l'éprouvette, on recueille des valeurs de position angulaire qui, pour générer des paires de valeurs, sont affectées à des valeurs de signaux provenant des signaux émis par le dispositif d'observation (21).

3.  Procédé selon la revendication 1, **caractérisé par le fait que** le déplacement de l'ombre (18), lors de la rotation de l'éprouvette, est suivi dans une direction qui est sensiblement perpendiculaire à l'axe de rotation.

4.  Procédé selon la revendication 3, **caractérisé par le fait que** la trajectoire des rayons (3) est orientée de façon sensiblement perpendiculaire à l'axe de rotation (6) de l'éprouvette et perpendiculairement à la direction dans laquelle le dispositif d'observation (21) suit l'ombre (18).

5.  Procédé selon la revendication 2, **caractérisé par le fait que** l'on prend parmi les paires de valeurs des groupes qui servent individuellement à déterminer une fonction cosinus et ses paramètres.

6.  Procédé selon la revendication 5, **caractérisé par le fait que** l'on classifie comme étant valides les paramètres qui apparaissent en nombre pour tous les groupes affectés à une même arête et donc à une même fonction cosinus.

7.  Dispositif de mesure (1), notamment pour mesurer des valeurs caractéristiques sélectionnées sur des éprouvettes (4) comportant au moins une arête (5), en particulier des arêtes de coupe,
    comprenant un dispositif de réception (7) pour l'éprouvette (4), qui permet de faire tourner l'éprouvette autour d'un axe (6) prédéterminé et qui est relié à un dispositif de détection émettant des signaux caractérisant la position angulaire de l'éprouvette (4),
    comprenant un dispositif d'éclairage (2) qui génère un faisceau lumineux, lequel éclaire au moins une arête (5) de l'éprouvette, de manière à interrompre partiellement le faisceau lumineux et à produire une ombre (18),
    comprenant un dispositif d'observation (21) qui est placé en vis-à-vis de la source lumineuse (2), de manière à ce que l'ombre (18) produite par l'arête (5) tombe sur le dispositif d'observation (21), et qui émet des signaux caractérisant la position de l'ombre,
    comprenant un dispositif d'analyse (25) auquel sont transmis les signaux du dispositif de détection (24) et du dispositif d'observation (21) et qui exploite les signaux, et
    comprenant des moyens pour la mise en oeuvre du procédé selon la revendication 1.

8.  Dispositif de mesure selon la revendication 7, **caractérisé par le fait que** le dispositif d'analyse (25) comprend un bloc central (26) et un bloc de régression (28), le bloc central (26) ou un autre bloc (27) étant conçu pour réunir les signaux du dispositif de détection (24) et du dispositif d'observation (21), en vue de former des paires de valeurs, et pour classer des paires de valeurs par groupes, et **par le fait que** le bloc central (26) est conçu pour activer le bloc de régression (28) pour chaque groupe, afin de déterminer la fonction cosinus pour chaque groupe.

9. Dispositif de mesure selon la revendication 8, **caractérisé par le fait qu'**il est agencé pour déterminer les rayons des arêtes mesurées, à partir des fonctions cosinus.

10. Dispositif de mesure selon la revendication 7, **caractérisé par le fait qu'**il est conçu pour déterminer, à partir de chaque fonction cosinus, l'angle et le rayon de l'arête (5) produisant l'ombre (18) et **par le fait qu'**il est conçu pour fixer la valeur escomptée ou la valeur moyenne des rayons et angles obtenus, respectivement en tant que valeur d'angle valide et en tant que valeur de rayon valide.

11. Dispositif de mesure selon la revendication 7, **caractérisé par le fait que** le dispositif de réception (7) est relié à un dispositif de rotation qui est activé par un dispositif de commande relié au dispositif d'analyse (25).

12. Dispositif de mesure selon la revendication 7, **caractérisé par le fait que** le dispositif d'observation (21) est une caméra linéaire (22) dont les éléments photosensibles sont disposés dans une rangée qui est orientée perpendiculairement à l'axe (6) prédéterminé.

Fig. 1

Fig. 2

Fig. 3

Fig. 4

Fig. 5

Offset - Histogramm

Fig. 6

R/Phi - Diagramm

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5796485 A
- US 4807145 A